# EUROPÄISCHE PATENTSCHRIFT

(11) **EP 1 068 094 B1**
(45) Veröffentlichungstag und Bekanntmachung des Hinweises auf die Patenterteilung: **14.08.2002**
(21) Anmeldenummer: 99917894.0
(22) Anmeldetag: 27.03.1999
(51) Int. Cl.: B60N 2/44

(54) **Sitzpolster für Fahrzeugsitze**
Seat cushion for vehicle seat
Coussin pour siège d'automobile

(30) Priorität: 01.04.1998 DE 29805926 U
(43) Veröffentlichungstag der Anmeldung: 17.01.2001
(73) Patentinhaber: Johnson Controls GmbH, 51399 Burscheid (DE)
(72) Erfinder: STEINMEIER, Horst, 32312 Lübbecke (DE)
(74) Vertreter: Zapf, Christoph, Dipl.-Ing.
(86) Internationale Anmeldenummer: EP9902114
(87) Internationale Veröffentlichungsnummer: WO9950090

(56) Entgegenhaltungen:
- DE-A- 2 136 947
- DE-A- 3 928 883
- GB-A- 2 076 648
- US-A- 3 381 999
- US-A- 3 506 308
- US-A- 3 605 145
- US-A- 4 143 916
- US-A- 5 403 065
- US-A- 5 408 711

## Beschreibung

Die vorliegende Erfindung betrifft ein Sitzpolster für Fahrzeugsitze, mit mindestens einem Kernteil aus einem elastischen Kunststoffschaum.

Ein solches Sitzpolster ist beispielsweise aus der gattungsbildenden DE 39 28 883 C2 bekannt. Dieses Polsterteil ist für einen Sitz mit einer Klimazone vorgesehen und soll dazu einen guten Sitzund Klimakomfort aufweisen. Das bekannte Polsterteil ist aber relativ aufwendig konstruiert, weil es aus recht vielen Einzelteilen besteht. In einem schalenförmigen Grundelement ist ein erstes Kernteil aus einem Kunststoff-Schaummaterial angeordnet. In einer Ausnehmung des Grundelementes ist ein Deckelelement auswechselbar angeordnet. Dieses Deckelelement besitzt einen weiteren Kern aus einem Kunststoff-Schaummaterial, dessen Härte größer als die Härte des anderen Kerns sein soll. Das Deckelelement ist mit Einsenkungen ausgestattet, die zu der vom Grundelement abgewandten Oberseite hin konisch erweitert ausgebildet sind. Auf der dem Grundelement zugewandten Unterseite ist das Deckelelement mit voneinander beabstandeten Vorsprüngen ausgebildet, zwischen denen ein Hohlraum gebildet ist. Dieser Hohlraum erstreckt sich zusammenhängend zwischen dem Grundelement und dem Deckelelement, und er ist mit der Oberseite des Polsterteils über Öffnungen fluidisch verbunden. Ein Teil der Öffnungen erstreckt sich durch das Deckelelement bzw. durch den Kern und den Bezug des Deckelelementes hindurch; diese Öffnungen münden in die Einsenkungen ein. Weitere Öffnungen sind am umlaufenden Außenrand des Deckelelementes gebildet. Am Grundelement sind Entlüftungskanäle ausgebildet, die mit dem zwischen dem Grund- und dem Deckelelement vorhandenen Hohlraum fluidisch verbunden sind. Die Entlüftungskanäle bilden Auslaßöffnungen, durch die hindurch Luft aus dem Hohlraum entweichen kann, wobei diese Luft mit Feuchtigkeit befrachtet sein kann. Dadurch soll Feuchtigkeit von der Oberseite des Polsterteils durch den Hohlraum hindurch aufgrund natürlicher Kaminwirkung entfernt werden.

Gemäß DE-A-2 136 947 sind in eine Sitzpolsterung - als separate Einzelteile - Hohlkörper mit einer rohrförmigen Wandung integriert. Diese Hohlkörper sind. jeweils von Spiralfedern umgeben. Die zahlreichen separaten Einzelteile führen zu einer aufwendigen Herstellung.

Auch gemäß US-A-3 506 308 sind separate, rohrartige Balge in ein Polstermaterial eingebettet. Jedes Balgelement besteht aus einem dünnen, flexiblen Kunststoffrohr mit endseitig angeschweißten kreisförmigen Endplatten. Innerhalb jedes Balges ist eine Schraubenfeder eingesetzt. Auch diese Ausführung führt aufgrund vieler Einzelteile zu einer aufwendigen Herstellung.

In dem weiteren Dokument US-A-5 408 711 ist ebenfalls ein sehr ähnlicher Stand der Technik beschrieben, weil auch demnach einzelne Röhrenelemente in ein Sitzteil eingesetzt sind.

Es sind darüber hinaus auch sogenannte aktive Klimasitze bekannt (vgl. beispielsweise die US 5 403 065), bei denen mit elektrischen Lüftern (Ventilatoren) für eine ständige Luftzirkutation im Sitzbereich gesorgt wird. Solche Systeme sind natürlich besonders aufwendig und teuer.

Der vorliegenden Erfindung liegt die Aufgabe zugrunde, ein Sitzpolster der eingangs genannten, gattungsgemäßen Art zu schaffen,. das sich durch konstruktive Einfachheit und daraus resultierende einfachere Herstellbarkeit bei gleichzeitig optimalem Klima- und Sitzkomfort auszeichnet.

Erfindungsgemäß wird dies dadurch erreicht, dass das Kemteil einstückig geformt aus einem unteren Basisabschnitt und aus mehreren, auf seiner einer Sitzfläche zugekehrten Seite zumindest in einem Teilbereich der Sitzfläche an dem Basisabschnitt angeformten, einander benachbarten und sich im Wesentlichen senkrecht zur Sitzfläche von dem Basisabschnitt weg nach oben erstreckenden Röhrenabschnitten besteht.

Somit ist bevorzugt nur ein einziges, einstückiges Kernteil aus einem Kunststoffschaum vorhanden, wobei über die sich im wesentlichen senkrecht zur Sitzfläche erstreckenden, angeschäumten Röhrenabschnitte die Trag- und Stützeigenschaften definiert werden. Diese können besonders einfach an die jeweiligen Anforderungen für optimalen Schwingungskomfort und optimale Sitzdruckverteilung angepaßt werden, und zwar vorzugsweise allein durch eine entsprechende Formgebung, d.h. vor allem durch Auslegung der tragenden Röhren-Querschnitte und/oder freien Längen der einzelnen Röhrenabschnitte. Allerdings wäre es grundsätzlich auch möglich, alternativ oder zusätzlich verschiedene Schaummaterialien mit unterschiedlichen physikalischen Eigenschaften einzusetzen.

Für einen guten Klimakomfort ist vorgesehen, daß die Röhrenabschnitte Löcher aufweisen, die sich vollständig durch das Kernteil inklusive des Basisabschnittes hindurch erstrecken und somit beidseitig randoffen sind. Die durchgehenden Löcher erlauben einen effektiven Luft- und Feuchtigkeitsaustausch durch das Kernteil hindurch, und zwar vorteilhafterweise auch ohne aktive Mittel, wie Ventilatoren oder dergleichen. Erfindungsgemäß handelt es sich daher um ein rein passives Klimasystem, was sehr einfach und wirtschaftlich ist.

Weitere vorteilhafte Ausgestaltungsmerkmale der Erfindung sind in den Unteransprüchen sowie der folgenden Beschreibung enthalten.

Anhand eines bevorzugten, in der Zeichnung veranschaulichten Ausführungsbeispiels soll im folgenden die Erfindung näher erläutert werden. Dabei zeigen:
- Fig. 1: eine teilgeschnittene Perspektivansicht eines erfindungsgemäßen Sitzpolsters und
- Fig. 2: eine vergrößerte Perspektivansicht eines aus dem Sitzpolster herausgeschnittenen Teilbereichs.

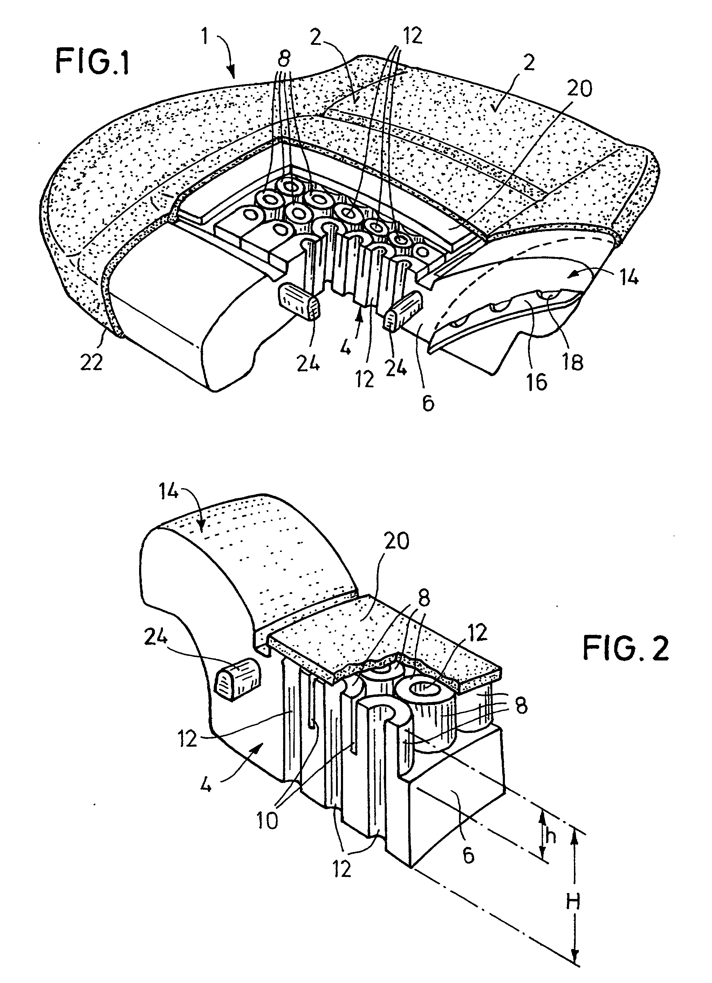

Das in Fig. 1 dargestellte Sitzpolster 1 ist insbesondere als unteres Sitzteil eines Fahrzeugsitzes gedacht, kann aber gegebenenfalls auch für eine Fahrzeugsitz-Rückenlehne verwendet werden. Das Sitzpolster 1 weist eine obere Sitzfläche 2 auf, die in einer sitzergonomischen Weise reliefiert ist. Innerhalb des Sitzpolsters 1 ist ein Kernteil 4 aus einem elastischen Kunststoffschaum angeordnet.

Erfindungsgemäß besteht das Kernteil 4 aus einem unteren, d.h. auf der von der Sitzfläche 2 abgekehrten Unterseite angeordneten Basisabschnitt 6 sowie aus einer Vielzahl von einander benachbarten, an dem Basisabschnitt 6 einseitig angeformten und sich im wesentlichen senkrecht zur Sitzfläche 2 erstreckenden Röhrenabschnitten 8. Diese Röhrenabschnitte 8 sind bevorzugt nur in einem Teilbereich der Sitzfläche 2 gebildet, in welchem Teilbereich die hauptsächliche Belastung durch eine auf dem Sitz sitzende Person auftritt. Wie dargestellt, können die Röhrenabschnitte 8 in mehreren Reihen neben- bzw. hintereinander angeordnet sein. Vorzugsweise sind hierbei die einzelnen Röhrenabschnitte 8 jeweils allseitig voneinander über Spalte 10 beabstandet (s. Fig. 2), so daß sie jeweils relativ frei elastisch schwingend beweglich sind.

Die Röhrenabschnitte 8 weisen jeweils ein Loch 12 auf, wobei sich alle diese Löcher 12, zumindest aber eine Teilmenge der Löcher 12, vollständig durch das Kernteil 4, inklusive des Basisabschnittes 6, hindurch erstrecken und somit beidseitig nach oben und unten hin offen sind.

Gemäß Fig. 2 erstrecken sich die Röhrenabschnitte 8 ausgehend von dem Basisabschnitt 6 über eine freie Länge (Höhe h), die etwa der Hälfte der gesamten Höhe H des Kernteils 4 entspricht.

Die erfindungsgemäßen Röhrenabschnitte 8 sind zunächst hauptsächlich für die physikalischen, d.h. vor allem die mechanischen und elastischen Eigenschaften verantwortlich. Dabei kann zur optimalen Auslegung des Sitzkomforts vorgesehen sein, die Röhrenabschnitte 8 zumindest teilweise bezüglich ihrer mechanischen und elastischen Eigenschaften über die Sitzfläche 2 hinweg unterschiedlich auszulegen, und zwar vorteilhafterweise allein durch verschiedene Raumformen, insbesondere durch unterschiedliche Querschnitte (unterschiedliche Formen und/oder Flächengrößen) und/oder durch unterschiedliche freie Längen bzw. Höhen h, vorzugsweise bei im übrigen gleichen materialspezifischen Eigenschaften. In der dargestellten, bevorzugten Ausführungsform sind die Röhrenabschnitte 8 im Querschnitt jeweils kreisringförmig ausgebildet. Hierbei können die Röhrenabschnitte 8 zumindest teilweise unterschiedliche Innen- und/oder Außendurchmesser aufweisen, um ihnen verschiedene physikalische Eigenschaften zu verleihen. Eventuell sind auch andere Querschnittsformen möglich, beispielsweise polygonal, ggf. wabenförmig.

Erfindungsgemäß kann somit das Kernteil 4 einheitlich aus dem gleichen Kunststoffschaum (Monoschaum) hergestellt werden, was herstellungsmäßig besonders günstig ist. Allerdings liegt es auch im Bereich der Erfindung, das Kernteil 4 aus verschiedenen Schaum-Materialien herzustellen (2-Zonen-Schaum), und zwar insbesondere in einem dem Bereich der Röhrenabschnitte 8 benachbarten Randbereich 14. Diese Ausführung ist in Fig. 1 veranschaulicht. Dabei ist vorzugsweise zwischen den verschiedenen Schaum-Materialien ein Trennvlies 16 eingebettet angeordnet. Dieses Trennvlies 16 kann Löcher 18 aufweisen, durch die hindurch sich die Schaummaterialien stoffschlüssig miteinander verbinden.

Vorzugsweise besteht das Kernteil 4 aus einem PUR-Kaltschaum. Insbesondere im Bereich der Röhrenabschnitt 8 weist dieses Material eine Stauchhärte von insbesondere ca. 10,5 kPa auf. Im Falle eines 2-Zonen-Schaums - insbesondere im Randbereich 14 - kann das andere Schaummaterial eine Stauchhärte von ca. 13,5 Kpa aufweisen.

Es ist ferner vorteilhaft, wenn auf dem Kernteil 4 eine zumindest den Bereich der Röhrenabschnitte 8 überdeckende Deckschicht 20 angeordnet ist. Diese Deckschicht 20 liegt somit auf den freien, oberen Stirnseiten der Röhrenabschnitte 8 auf. Diese Deckschicht 20 hat erfindungsgemäß zwei Aufgaben. Einerseits bewirkt sie eine optimale Sitzdruckverteilung, d.h. eine optimale Einleitung bzw. Verteilung der Gewichtskraft in bzw. auf die einzelnen Röhrenabschnitte 8. Andererseits gewährleistet die Deckschicht 20 auch einen optimalen Feuchtigkeitstransport von der Sitzfläche 2 weg nach unten durch die Löcher 12 der Röhrenabschnitt 8 bzw. des Kernteils 4 hindurch nach unten.

Zu diesem Zweck wird für die Deckschicht 20 ein Material verwendet, welches Feuchtigkeit sehr schnell aufnehmen und innerhalb sehr kurzer Zeit wieder abgeben kann. Dazu ist besonders ein Vliesmaterial geeignet, welches unter der Bezeichnung ST 1400 C von der Firma Freudenberg erhältlich ist. Es handelt sich um ein Material mit einem Flächengewicht von 600 g/m² bei einer Dicke von 5 mm. Dieses Material besteht aus 70% PES und 30% Zellwolle. Für die genannte Klimafunktion kann aber auch jedes andere geeignete Material eingesetzt werden, beispielsweise Gummihaar, Latex, Schnittschaum oder dergleichen.

Schließlich sei erwähnt, daß das Kernteil 4 - einschließlich der bevorzugt vorgesehenen Deckschicht 20 - zumindest teilweise mit einem Überzugmaterial 22 überzogen ist. Üblicherweise handelt es sich um einen textilen Stoff, Leder oder Kunstleder. Bei der dargestellten Ausführungsform ist das Überzugmaterial 22 über nicht erkennbare Halteschlaufen befestigt, indem diese Halteschlaufen durch Schlitze des Kernteils 4 in dieses hineingeführt sind. Innerhalb des Kernteils 4 ist wenigstens ein streifenförmiges, sich durch die Halteschlaufen erstreckendes Halteelement 24 angeordnet. Diese Halteelemente 24 sind als relativ weiche Kunststoffprofile gebildet ("Softstrip"), insbesondere mit einer Rohdichte von ca. 85 kg/m³. Mit den so praktisch im Kemteil 4 befestigten Halteschlaufen kann sehr gut die oberflächige Profilierung bzw. reliefartige Kontur der Sitzfläche 2 erreicht werden.

Das erfindungsgemäße Sitzpolster 1 ist empirisch bzw. rechnerisch für den jeweiligen Anwendungsfall auszulegen. Die Anzahl der Röhrenabschnitte 8 sowie deren Abmessungen richtet sich nach der Belastung der Sitzfläche und hängt wiederum von der Dichte und Härte des verwendeten Schaumstoffes ab. Ferner spielt die Feinabstimmung der Sitzdruckverteilung mit in die Auslegung der Röhrenabschnitte hinein. Denkbar wäre auch, daß die Fläche, die durch die Röhrenabschnitte abgestützt wird, nicht, wie im Beispiel gezeigt, ein Rechteck bildet, sondern z.B. der Berührungsfläche des Gesäßes angepaßt ist. Aufgrund der unterschiedlichen Sitzdrücke könnten sich auch unterschiedliche Abmessungen der Röhrenabschnitte ergeben, was wiederum zu einer unregelmäßigen Anordnung der Röhren führen und die Spaltenabstände entsprechend beeinflussen könnte. Ähnliches gilt für die Höhenabmessungen der Röhrenabschnitte, wobei zusätzlich die Knicksteifigkeit zu berücksichtigen ist. Das gesamte System kann auf den jeweiligen Sitztyp rechnerisch (FEM-Rechnungen) abgestimmt werden.

## Patentansprüche

1. Sitzpolster (1) für Fahrzeugsitze, mit mindestens einem Kernteil (4) aus einem Kunststoffschaum, **dadurch gekennzeichnet, dass** das Kemteil (4) einstückig geformt aus einem unteren Basisabschnitt (6) und aus mehreren, auf seiner einer Sitzfläche (2) zugekehrten Seite zumindest in einem Teilbereich der Sitzfläche (2) an dem Basisabschnitt (6) angeformten, einander benachbarten und sich im Wesentlichen senkrecht zur Sitzfläche (2) von dem Basisabschnitt (6) weg nach oben erstreckenden Röhrenabschnitten (8) besteht.

2. Sitzpolster nach Anspruch 1,
**dadurch gekenzeichnet,** daß die Röhrenabschnitte (8) Löcher (12) umschließen, die sich vollständig durch das Kernteil (4) erstrecken und somit beidseitig offen sind.

3. Sitzpolster nach Anspruch 1 oder 2,
**dadurch gekenzeichnet,** daß sich die Röhrenabschnitte (8) ausgehend von dem Basisabschnitt (6) über eine Höhe (h) erstrecken, die etwa der Hälfte der gesamten Höhe (H) des Kernteils (4) entspricht.

4. Sitzpolster nach einem der Ansprüche 1 bis 3,
**dadurch gekenzeichnet,** daß die Röhrenabschnitte (8) zumindest teilweise bezüglich ihrer physikalischen Eigenschaften über die Sitzfläche (2) hinweg unterschiedlich ausgelegt sind, und zwar durch verschiedene Raumformen, insbesondere durch unterschiedliche Querschnitte und/oder Höhen (h), insbesondere bei im übrigen gleichen materialspezifischen Eigenschaften.

5. Sitzpolster nach einem der Ansprüche 1 bis 4,
**dadurch gekenzeichnet,** daß die Röhrenabschnitte (8) im Querschnitt jeweils kreisringförmig ausgebildet sind.

6. Sitzpolster nach einem der Ansprüche 1 bis 5,
**dadurch gekenzeichnet,** daß die Röhrenabschnitte (8) zumindest teilweise unterschiedliche Innen- und/oder Außenabmessungen aufweisen.

7. Sitzpolster nach einem der Ansprüche 1 bis 6,
**dadurch gekenzeichnet,** daß die einzelnen Röhrenabschnitte (8) jeweils allseitig voneinander über Spalte (10) beabstandet sind.

8. Sitzpolster nach einem der Ansprüche 1 bis 7,
**dadurch gekenzeichnet,** daß das Kernteil (4) - insbesondere in einem dem Bereich der Röhrenabschnitte (8) benachbarten Randbereich (14) - aus verschiedenen Schaum-Materialien besteht.

9. Sitzpolster nach einem der Ansprüche 1 bis 8,
**dadurch gekenzeichnet,** daß das Kernteil (4) aus PUR-Kaltschaum besteht.

10. Sitzpolster nach Anspruch 8 oder 9,
**dadurch gekenzeichnet,** daß zwischen den verschiedenen Schaum-Materialien ein Trennvlies (16) angeordnet ist.

11. Sitzpolster nach einem der Ansprüche 1 bis 10,
**dadurch gekenzeichnet,** daß auf dem Kernteil (4) eine zumindest den Bereich der Röhrenabschnitte (8) überdeckende Deckschicht (20) angeordnet ist.

12. Sitzpolster nach einem der Ansprüche 1 bis 11,
**dadurch gekenzeichnet,** daß das Kernteil (4) - gegebenenfalls einschließlich der Deckschicht (20) - zumindest teilweise mit einem Überzugmaterial (22) überzogen ist.

13. Sitzpolster mach Anspruch 12,
**dadurch gekenzeichnet,** daß das Überzugsmaterial (22) über Halteschlaufen befestigt ist, indem die Halteschlaufen durch Schlitze des Kernteils (4) in dieses hineingeführt sind, wobei innerhalb des Kernteils (4) wenigstens ein streifenförmiges, sich durch die Halteschlaufen erstreckendes Halteelement (24) angeordnet ist.

14. Sitzpolster nach Anspruch 13,
**dadurch gekenzeichnet,** daß das/jedes Halteelement (24) von einem relativ weichen Kunststoffprofil gebildet ist.

## Claims

1. Seat cushion (1) for vehicle seats, having at least one core part (4) consisting of plastic foam, **characterized in that** the core part (4) is formed as a single piece from a lower base section (6) and from a plurality of tube sections (8), which, on its side facing a seat surface (2), are integrally formed on the base section (6), at least in a subregion of the seat surface (2), are adjacent to one another and extend away from the base section (6) upwards essentially perpendicularly with respect to the seat surface (2).

2. Seat cushion according to Claim 1, **characterized in that** the tube sections (8) surround holes (12), which extend completely through the core part (4) and are therefore open on both sides.

3. Seat cushion according to Claim 1 or 2, **characterized in that** the tube sections (8) extend from the base section (6) over a height (h) which corresponds to approximately half of the entire height (H) of the core part (4).

4. Seat cushion according to one of Claims 1 to 3, **characterized in that** at least some of the tube sections (8) differ in configuration over the seat surface (2) with regard to their physical properties, specifically by means of different spatial shapes, in particular by means of different cross sections and/or heights (h), in particular with otherwise identical material-specific properties.

5. Seat cushion according to one of Claims 1 to 4, **characterized in that** the tube sections (8) are in each case of annular cross section.

6. Seat cushion according to one of Claims 1 to 5, **characterized in that** at least some of the tube sections (8) have different internal and/or external dimensions.

7. Seat cushion according to one of Claims 1 to 6, **characterized in that** the individual tube sections (8) are in each case spaced apart from one another on all sides via gaps (10).

8. Seat cushion according to one of Claims 1 to 7, **characterized in that** the core part (4) - in particular in an edge region (14) adjacent to the region of the tube sections (8) - consists of different foam materials.

9. Seat cushion according to one of Claims 1 to 8, **characterized in that** the core part (4) consists of a cold polyurethane foam.

10. Seat cushion according to Claim 8 or 9, **characterized in that** a separating nonwoven fabric (16) is arranged between the different foam materials.

11. Seat cushion according to one of Claims 1 to 10, **characterized in that** an outer layer (20) covering at least the region of the tube sections (8) is arranged on the core part (4).

12. Seat cushion according to one of Claims 1 to 11, **characterized in that** the core part (4) - optionally including the outer layer (20) - is at least partially covered by a covering material (22).

13. Seat cushion according to Claim 12, **characterized in that** the covering material (22) is fastened via retaining loops by the retaining loops being guided into the core part (4) through slots therein, at least one strip-shaped retaining element (24) extending through the retaining loops being arranged within the core part (4).

14. Seat cushion according to Claim 13, **characterized in that** the/each retaining element (24) is formed by a relatively soft plastic profile.

## Revendications

1. Rembourrage de siège (1) pour sièges de véhicules, avec au moins une partie centrale (4) en mousse synthétique, **caractérisé en ce que** la partie centrale (4) formée d'un seul tenant se compose d'une section de base inférieure (6) et, de son côté tourné vers une surface d'assise (2), au moins dans une zone partielle de ladite surface d'assise (2), de plusieurs sections de tubes (8) voisines les unes des autres, contigues à la section de base (6), et s'étendant à partir de la section de base (6) vers le haut, essentiellement dans le sens perpendiculaire à la surface d'assise (2).

2. Rembourrage de siège selon la revendication 1, **caractérisé en ce que** les sections de tubes (8) enferment des trous (12) qui s'étendent entièrement à travers la partie centrale (4) et sont ainsi ouverts des deux côtés.

3. Rembourrage de siège selon la revendication 1 ou 2, **caractérisé en ce que** les sections de tubes (8) s'étendent, à partir de la section de base (6), sur une hauteur (h) qui correspond à peu près à la moitié de la hauteur totale (H) de la partie centrale.

4. Rembourrage de siège selon l'une quelconque des revendications 1 à 3, **caractérisé en ce que** les sections de tubes (8) sont conçues au moins en partie, en ce qui concerne leurs caractéristiques physiques, de manière différente sur la surface d'assise (2), à savoir avec des formes dans l'espace différentes, en particulier des sections et/ou des hauteurs (h) différentes, notamment dans le cas de caractéristiques spécifiques à la matière par ailleurs identiques,

5. Rembourrage de siège selon l'une quelconque des revendications 1 à 4, **caractérisé en ce que** les sections de tubes (8) sont conçues avec une section annulaire.

6. Rembourrage de siège selon l'une quelconque des revendications 1 à 5, **caractérisé en ce que** les sections de tubes (8) présentent au moins en partie des dimensions intérieures et/ou extérieures différentes.

7. Rembourrage de siège selon l'une quelconque des revendications 1 à 6, **caractérisé en ce que** les différentes sections de tubes (8) sont écartées les uns dès autres de tous côtés par des interstices (10).

8. Rembourrage de siège selon l'une quelconque des revendications 1 à 7, **caractérisé en ce que** la partie centrale (4), en particulier dans une zone de bordure (14) voisine de la zone des sections de tubes (8), est constituée de mousses différentes.

9. Rembourrage de siège selon l'une quelconque des revendications 1 à 8, **caractérisé en ce que** la partie centrale (4) est formée de mousse à froid de polyuréthane.

10. Rembourrage de siège selon la revendication 8 ou 9, **caractérisé en ce qu'**un matériau non-tissé de séparation (16) est disposé entre les différentes mousses,

11. Rembourrage de siège selon l'une quelconque des revendications 1 à 10, **caractérisé en ce qu'**une couche supérieure (20) recouvrant au moins la zone des sections de tubes est disposée sur la partie centrale (4).

12. Rembourrage de siège selon l'une quelconque des revendications 1 à 11, **caractérisé en ce que** la partie centrale (4), y compris éventuellement la couche supérieure (20), est recouverte au moins en partie par une matière de revêtement (22).

13. Rembourrage de siège selon la revendication 12, **caractérisé en ce que** la matière de revêtement (22) est fixée par des boucles de maintien qui sont introduites dans la partie centrale (4) par des fentes pratiquées dans celle-ci, au moins un élément de maintien (24) en forme de bande s'étendant à travers les boucles de maintien étant disposé à l'intérieur de la partie centrale (4).

14. Rembourrage de siège selon la revendication 13, **caractérisé en ce que** l'élément/chaque élément de maintien (24) est formé par un profilé en matière plastique relativement mou.
